# EUROPEAN PATENT APPLICATION

(11) **EP 4 685 060 A2**
(43) Date of publication of application: **28.01.2026**
(21) Application number: 25191645.8
(22) Date of filing: 24.07.2025
(51) Int. Cl.: B65B 13/04, B65B 13/18, B65B 25/14, H01M 10/04, B65B 11/04, B65B 11/58, B65B 13/16, B65B 27/10, B65B 41/16, B65B 61/06, B65B 63/04

(54) **APPLICATOR DEVICE FOR APPLYING A FASTENING ELEMENT TO A MULTILAYER SEMI-FINISHED PRODUCT FOR MAKING AN INTERNAL ASSEMBLY FOR ELECTROCHEMICAL CELLS**

(30) Priority: 24.07.2024 IT 202400017212
(71) Applicant: G.D S.p.A., 40133 Bologna (BO) (IT)
(72) Inventor: BIONDI, Andrea, 40133 Bologna (BO) (IT); CAVAZZA, Luca, 40133 Bologna (BO) (IT); VENTURA, Maurizio, 40133 Bologna (BO) (IT); CAMPAGNOLI, Enrico, 40133 Bologna (BO) (IT); GUAZZALOCA, Marco, 40133 Bologna (BO) (IT); LENZI, Matteo, 40133 Bologna (BO) (IT)
(74) Representative: Locas, Davide

(57) **Abstract**

Applicator device for applying a fastening element to a multilayer semi-finished product comprises an applicator drum, a feeding device configured to supply said fastening element to said applicator drum at a pick-up position, and a storage and dispensing unit. The feeding device comprises a pair of guide rollers and at least one abutment roller, at least one of said guide rollers being a motorised roller. The fastening element is partially wound onto a first roller of the guide rollers and passes between said guide rollers making the fastening element advance in the advancement direction. The applicator drum and the abutment roller are susceptible to move towards each other by moving the applicator drum towards the abutment roller, the abutment roller being configured in such a way as to urge the fastening element against the applicator drum.

## Description

The present invention relates to an applicator device for applying a fastening element to a multilayer semi-finished product for making an internal assembly, e.g. for use in electrochemical cells.

The invention also concerns an apparatus for making an internal assembly that includes a coupling device and an applicator device.

The invention further relates to a method for applying a fastening element to a multilayer semi-finished product within the field of the manufacturing of an internal assembly.

The present invention finds a preferred, though not exclusive, application in the field of the production of electrochemical cells, for the manufacture of which a multilayer semi-finished product is used, e.g. in coil or stacked form.

In particular, in the pertinent technical sector, it is known to combine conductor elements and separator elements into layers in order to form an anode and cathode structure. The article made through the superposition of the above-mentioned layers can then be wound in the form of a coil or coupled with layers in flat or other configurations, and used for the construction of the electrochemical cell itself.

In the present disclosure as well as in the herein enclosed claims, certain terms and expressions are deemed to have, unless otherwise expressly indicated, the meaning expressed in the following definitions.

The term "ribbon-like article" is intended to mean any solid product which, within an industrial production line, is presented in the form of an elongated ribbon or strip, i.e. an element in which the longitudinal extension is significantly greater than its transversal extension. The ribbon-like article can be formed by a single ribbon or strip of material, or by overlapping several ribbons arranged in layers.

The ribbon-like article also has characteristics that allow a certain bending during its advancement along a relative production line.

The ribbon-like article can for example be made by overlapping conductor and insulating layers alternated with each other and be intended to form a sandwich to be wound for making a coil intended for the production of electrochemical cells.

A further example can be represented by a ribbon-like article consisting of an insulating ribbon that acts as a separator between conductor elements. The insulating ribbon-like article can then be folded in a "Z" arrangement, interposing between one loop and another of the "Z" alternately conducting elements in the form of foils that form the anode and cathode of the electrochemical cell respectively.

The ribbon-like article can also be pre-cut, forming individual sheets to be stacked in a structure with a predominantly vertical extension.

The term "to couple" referring to a ribbon-like article means to combine the ribbon-like article with a further element, or to combine different portions of the ribbon-like article with each other, in such a way as to obtain a structure of a different shape from the ribbon-like article, preferably with a non-ribbon-like shape, such as a reel or packet.

The term "to wind" referring to a ribbon-like article indicates a preferred method of coupling the ribbon-like article, whereby it is coupled into a spiral structure by rotation about an axis, flat surface or other structure. By winding, the ribbon-like article will form one or more turns around the axis or the structure.

The term "coil" is intended to mean any spiral structure formed by winding a ribbon, strip or more generally a ribbon-like article around an axis, a flat surface or another winding structure. Depending on the structure around which the ribbon-like article is wound, the overall shape of the coil may be substantially cylindrical rather than crushed or otherwise shaped.

As mentioned above, the coil can find application not only in the electrochemical cell sector but also in other sectors, such as for example in the conductor sector, within which coil-shaped structures can likewise be used.

The term "internal assembly" of an electrochemical cell generically refers to a structure in which conducting and separating elements are combined within an electrochemical cell. Such a structure may be a substantially flat layered structure alternating on top of each other (achieved by means of "stacking" or "Z-folding" techniques) or it may be a coil structure formed by the spiral winding of conductor and separator ribbons alternating with each other.

The term "internal assembly" refers more generally to any solid product obtained by the coupling of a plurality of elements or a plurality of different portions of a single element. For example, the internal assembly may be formed by winding a ribbon-like article, e.g. in the form of a coil, or by coupling a ribbon-like article with other elements, such as conducting elements that may be arranged between loops of a ribbon-like article folded in a "Z" shape, and coupled to it in a packet configuration, as illustrated above.

Yet another example is stacked solutions, in which individual sheets of insulating material and individual sheets of conducting material are layered on top of each other, coupling them together in an alternating configuration.

The term "multilayer semi-finished product" with reference to an internal assembly refers to an intermediate product used in the production of the internal assembly. The multilayer semi-finished product includes a plurality of layers, which may be represented by the successive windings of a spirally wound ribbon-like article, or by the alternating layers formed by a "Z"-folded ribbon-like article and the conducting elements in the form of foils, or again by the overlapping foils forming the stacked solutions illustrated above. The internal assembly is made using the multilayer semi-finished product and subsequent finishing processes. Finishing operations may comprise the application of at least one ribbon capable of fastening a flap or other portion of the multilayer semi-finished product in order to maintain the structure in the configuration obtained by winding or another type of coupling. The finishing operations of the internal assembly can of course also include other types of operations, such as marking operations, e.g. by laser, or welding and/or gluing operations, or other operations adapted to apply inserts.

The term "flap" refers to any portion of the ribbon-like article, or more generally of a separating or conducting element, preferably located at an edge or end thereof, and defining an end part of the semi-finished product once formed. It should also be noted that more than one flap may be defined on a semi-finished product.

The term "fastening element" refers to an element capable of fastening the structure of a semi-finished product, particularly a multilayer one, in an at least relatively stable form, during or at the end of a manufacturing process thereof.

The fastening element can, for example, be intended to fasten a flap of the semi-finished product, or other portion thereof, in a respective configuration assumed during the manufacturing process, so that this configuration can be maintained permanently after processing, or temporarily during subsequent processing steps. The fastening element can be in the form of a flexible element, such as a ribbon, a string, a band, and can be either flat or have a structure that does not have predominant dimensions compared to the others, e.g. when it is sufficient to fasten the flap of the semi-finished product in a limited and well-circumscribed area in order to guarantee the required configuration stability according to the specific requirement.

The term "closed path" is intended to mean a path along which a winding head or other element travels in which the starting point and the end point of the path substantially coincide.

The term "continuous" refers to an expression of motion, which means an operation that takes place without interruption, without there being a stop or an interruption in the operation in question. In particular, with reference to the movement of a ribbon-like article, semi-finished product, or other element, the term "continuous motion", or even just "continuous", indicates that the ribbon-like article/semi-finished product/element is never stopped during its movement. The movement can still be slowed down, as an acceleration and deceleration of the ribbon-like/semi-finished article/element is contemplated without, however, leading to a complete stop. It will be appreciated that it may be expected that the ribbon-like/semi-finished article/element will reach an absolute velocity of zero, if the motion includes an inversion. In such a case, the ribbon-like/semi-finished article/element may, however, be subjected to non-zero acceleration the instant it reaches zero velocity, so as to avoid stopping the movement.

The term "substantially constant" referring to a measurement or amount, such as for example the speed of displacement of an object, means that such measurement or amount maintains, over time, a value which preferably varies by a maximum of ±10%, preferably by a maximum of ±5%, preferably by a maximum of ±2%.

The term "integral" referring to the movement of two or more elements means that these elements perform substantially the same movement and substantially simultaneously. In other words, two integral elements move together, as a single body, although they are not necessarily joined or constrained to each other. It can in fact be provided that the respective systems of movement of the two elements are coordinated in such a way as to move, when necessary, the two elements together. Furthermore, it may be provided for the use of a temporary constraint between the two elements which, for example, joins them to each other in some steps, causing them to move together, and separates them again, making them movable independently of each other.

It should also be noted that the expression "to displace an object between a first position and a second position" means both the displacement from the first position to the second position and the displacement from the second position to the first position.

This definition applies in an analogous way to similar expressions of motion, such as for example to transfer or to move a generic object between two positions or between two zones or even between two different operating configurations.

Preferably, the term "displace along a path between a first position and a distinct second position", referring to a coupling device, a structure or more generally to a component, means a movement between two distinct spatial positions, during which the centre of mass changes position along that path.

Therefore, this displacement excludes rotations of the coupling/structure/component around a point essentially coincident with its centre of mass.

For example, in the case of a spiral, rotations about the axis of the spiral, which is considered to be substantially coincident with the centre of mass of the spiral, will be excluded, even though they may not be perfectly coincident due to the distribution of the material and the relative masses not necessarily uniformly distributed around the axis of the spiral.

Other movements of the spiral will instead be included in the definition of movement along a path between a first position and a distinct second position. This includes, for example, linear displacements, roto-translation motions and rotations about axes that do not coincide with the axis of the spiral, i.e. the axis around which the spiral shape is created.

The Applicant, in the context of the constant need to increase the performance and efficiency of production processes for making internal assemblies, has preliminarily observed how the operations necessary to fasten the layers forming the internal assembly can constitute an important element of limitation of the production capacity of the line itself.

Indeed, the Applicant observed that high speed and precision in the process of coupling the semi-finished layered product which is intended for the manufacture of the internal assembly can be frustrated by subsequent operations. In particular, the Applicant has observed that the operations required to apply an element capable of fastening the layers in their coupled configuration may have a relatively significant impact on the overall time required for making the internal assembly, as well as causing an alteration in the structure of the semi-finished product obtained by the previous processing operations, in particular in terms of precision in the coupling of the layers.

This requirement places a limit on the productivity of the production line, as it is typically necessary to set limits on the speed at which the element used for fastening the layers of the semi-finished product is moved to be applied on the semi-finished product itself.

In the context of the need to increase the speed of application of the fastening element, the Applicant therefore perceived that a precise and controlled advancement of the fastening element along the path it takes prior to its application on the semi-finished product can allow the use of higher movement speeds.

The Applicant also noted that an adequate definition of the path with which the fastening element is supplied to the applicator with which it is attached to the semi-finished product may enable the operation of applying the fastening element as a whole to be made quicker, as well as facilitating the operation of arranging the fastening element on the relevant applicator.

The Applicant thus further perceived how it is possible to increase the productivity of a device for the application of fastening elements with respect to known solutions, as well as of the internal assembly production line on which it is used, if the fastening element is advanced with a precise and regular trajectory, reducing the risk that the speed of movement thereof and/or the movement of the device and production line components in general, lead to possible deflections from an optimal application trajectory.

The Applicant finally found that by providing a suitable feeding device configured to supply said fastening element to an applicator drum, which is configured to apply the fastening element to a respective multilayer semi-finished product, it is possible to increase the precision with which this operation is carried out at said pick-up position.

Thanks to these features, the fastening element can be applied at a higher speed than known solutions, without this resulting in a limitation in the application precision of the fastening element.

In a first aspect thereof, therefore, the present invention relates to an applicator device for applying a fastening element, preferably flexible, to a multilayer semi-finished product for making an internal assembly, preferably for electrochemical cells.

Preferably, said applicator device comprises an applicator drum preferably configured to transport said fastening element from a pick-up position to a release position. Preferably at said release position, said fastening element is applied to a respective multilayer semi-finished product. Preferably at said release position, said fastening element is intended to be applied on a respective multilayer semi-finished product.

Preferably, said applicator device comprises a feeding device preferably configured to supply said fastening element to said applicator drum, preferably at said pick-up position.

Preferably, said applicator device comprises a storage and dispensing unit at which said fastening element is stored, preferably in the form of a coil. Preferably at said storage and dispensing unit said fastening element is dispensed towards said feeding device. Preferably, said applicator device is configured in such a way as to define an advancement direction of said fastening element from said storage and dispensing unit to said applicator drum.

Preferably, said feeding device comprises a pair of guide rollers. Preferably, said feeding device comprises at least one abutment roller. Preferably at least one of said guide rollers is a motorised roller. Preferably, said abutment roller is arranged downstream of said motorised rollers with respect to said advancement direction. Preferably, said feeding device is configured in such a way that said fastening element is partially wound onto a first roller of said guide rollers. Preferably said feeding device is configured in such a way that said fastening element passes between said guide rollers by advancing said fastening element in said advancement direction.

Preferably said applicator drum and said abutment roller are susceptible to move towards each other. Preferably, said abutment roller is configured in such a way as to urge said fastening element against said applicator drum during a movement of said applicator drum and/or said abutment roller towards each other.

Thanks to these features, the applicator device of the present invention can advance the fastening element through the feeding device, supplying it to the applicator drum, in a rapid and appropriately controlled manner, by means of the pair of guide rollers and the abutment roller.

The use of the guide rollers allows a constant tension of the fastening element to be maintained, preventing unwanted bending, breaking or stretching. By keeping the fastening element taut and well aligned, the pair of rollers minimises material waste.

The pair of guide rollers allows for a smooth and continuous feed of the fastening element, improving the efficiency of the application process. This reduces downtime and increases overall productivity.

The guide rollers guide the fastening element precisely, ensuring that it is evenly supplied to the applicator drum.

Furthermore, the applicator device according to the present aspect of the invention allows the use of different types of fastening elements, having different widths, thicknesses and materials, making the applicator device particularly versatile and capable of handling a wide range of applications.

The abutment roller ensures that the fastening element is precisely guided towards the applicator drum, keeping the fastening element in the correct position and reducing the risk of deflections that could cause imprecise application.

Thanks to the abutment roller, pressure can be exerted on the applicator drum to limit the possibility of the fastening element slipping. This helps to maintain a constant application speed and prevent errors in the positioning of the fastening element.

In a second aspect thereof, the present invention relates to an apparatus for making an internal assembly, preferably for an electrochemical cell.

Preferably said internal assembly comprises a multilayer semi-finished product and a respective fastening element, preferably flexible.

Preferably said apparatus includes a coupling device, preferably configured to make the multilayer semi-finished product by coupling a plurality of individual layers.

Preferably said apparatus comprises an applicator device for applying the fastening element to the multilayer semi-finished product.

Preferably, said applicator device comprises an applicator drum preferably configured to transport said fastening element from a pick-up position to a release position. Preferably, at said release position said fastening element is applied to a respective multilayer semi-finished product.

Preferably, said applicator device comprises a feeding device preferably configured to supply said fastening element to said applicator drum, preferably at said pick-up position.

Preferably, said applicator device comprises a storage and dispensing unit at which said fastening element is stored, preferably in the form of a coil. Preferably at said storage and dispensing unit said fastening element is dispensed towards said feeding device. Preferably, said applicator device is configured in such a way as to define an advancement direction of said fastening element from said storage and dispensing unit to said applicator drum.

Preferably, said feeding device comprises a pair of guide rollers. Preferably, said feeding device comprises at least one abutment roller. Preferably at least one of said guide rollers is a motorised roller. Preferably, said abutment roller is arranged downstream of said motorised rollers with respect to said advancement direction. Preferably, said feeding device is configured in such a way that said fastening element is partially wound onto a first roller of said guide rollers. Preferably said feeding device is configured in such a way that said fastening element passes between said guide rollers by advancing said fastening element in said advancement direction.

Preferably said applicator drum and said abutment roller are susceptible to move towards each other. Preferably, said abutment roller is configured in such a way as to urge said fastening element against said applicator drum during a movement of said applicator drum and/or said abutment roller towards each other.

Preferably said applicator device is associated with said coupling device in such a manner that said fastening element is applied to said multilayer semi-finished product at at least one outer flap of said multilayer semi-finished product.

The apparatus according to this aspect allows the fastening element to be advanced through the feeding device, supplying it to the applicator drum, in a rapid and appropriately controlled manner, thanks to the presence of the pair of guide rollers and the abutment roller.

The guide rollers enable the feeding device to deliver the fastening element precisely to the applicator drum, keeping the fastening element with constant tension and well aligned.

The guide rollers provide a continuous and smooth advancement of the fastening element, improving the efficiency of the application process, reducing machine downtime and increasing overall productivity.

The abutment roller ensures that the fastening element is precisely guided towards the applicator drum, keeping the fastening element in the correct position and reducing the risk of deflections that could cause imprecise application.

In a third aspect thereof, the present invention concerns a method for applying a fastening element to a multilayer semi-finished product.

Preferably, the method comprises supplying a multilayer semi-finished product. Preferably, said multilayer semi-finished product is produced by coupling a plurality of layers.

Said method preferably comprises supplying a fastening element, preferably a flexible one.

Preferably, the method involves passing said fastening element between a pair of guide rollers, rotating at least one of said guide rollers in such a way that said fastening element advances towards an applicator drum.

Preferably, the method comprises supplying an abutment roller downstream of said guide rollers with respect to an advancement direction of said fastening element.

Said method preferably comprises moving said applicator drum and said abutment roller closer together by moving said applicator drum and/or said abutment roller.

Preferably, the method involves urging said fastening element against said applicator drum after said moving said applicator drum and said abutment roller towards each other.

Preferably, the method comprises positioning said fastening element on said applicator drum.

Preferably, the method involves applying the fastening element to at least one outer flap of said semi-finished product via said applicator drum.

This also allows the fastening element to be applied to the multilayer semi-finished product in a fast and appropriately controlled manner, thanks to the presence of the pair of guide rollers.

Thanks to these features, the fastening element can be advanced through the feeding device, supplying it to the applicator drum, in a rapid and appropriately controlled manner, thanks to the presence of the pair of guide rollers and the abutment roller.

Advancing this fastening element via the pair of guide rollers allows a constant tension of the fastening element to be maintained, preventing unwanted bending, breaking or stretching. By keeping the fastening element taut and well aligned, the pair of rollers can minimise scraps and material waste.

The guide rollers provide a continuous and smooth advancement of the fastening element, improving the efficiency of the application process. This reduces downtime and increases overall productivity.

By urging the fastening element against the applicator drum via the abutment roller, it is possible to guide the fastening element precisely towards the applicator drum, keeping the fastening element in the correct position and reducing the risk of deflections that could result in inaccurate application.

Thanks to the abutment roller, pressure on the applicator drum can be reduced to such an extent that possible slippage of the fastening element is limited. This helps to maintain a constant application speed and prevent errors in the positioning of the fastening element.

The present invention, in at least one of the aforementioned aspects, may have at least one of the further preferred features listed below.

Preferably said applicator drum and said abutment roller are susceptible to move towards each other by moving said applicator drum towards said abutment roller.

Preferably, said abutment roller is configured in such a way as to urge said fastening element against said applicator drum during said movement of said applicator drum towards said abutment roller.

Preferably said feeding device is configured in such a way that said advancement direction is deflected by winding said fastening element onto said first roller.

Preferably, it is envisaged that said fastening element is partially wound onto a first roller of said guide rollers and that said advancement direction is deflected by winding said fastening element onto said first roller.

Thanks to each of these features, the fastening element can be aligned with the applicator drum in a particularly precise manner. This aids the positioning of the fastening element on the drum, improving the uniformity and quality of the application.

The change of direction via the motorised roller can also allow the tension to be distributed along the path of the fastening element, reducing the initial tension that the drum has to handle. This helps prevent tearing or deformation of the fastening element when it comes into contact with the drum.

The deflection of the fastening element allows the feed path towards the drum to be optimised, facilitating the integration of other components and mechanisms of the apparatus.

Preferably, said first roller is motorised.

The motorised roller allows the advancement speed of the fastening element to be precisely regulated. This facilitates the synchronisation of the movement of the fastening element and the applicator drum, ensuring an even and continuous application.

In addition, it can allow a constant tension of the fastening element to be maintained, preventing bending, breaking or loosening of the fastening element and ensuring high quality in the application.

Preferably, the applicator device comprises a control system configured to control the rotation speed of the motorised roller.

This allows the speed and tension of the fastening element to be monitored and regulated in real time, improving the efficiency and precision with which the feeding device supplies the fastening element to the applicator drum.

Preferably, both rollers of the pair of guide rollers are motorised.

By using two motorised rollers, the fastening element is guided more precisely, reducing the risk of slippage or misalignment, and supplying the fastening element to the drum in a particularly accurate and uniform manner.

Preferably, the pair of guide rollers is configured in such a way that the fastening element passes between the rollers of said pair.

Thanks to this feature, the risk of slipping can be reduced as the two motorised rollers can exert a balanced traction force that ensures smooth and constant movement of the fastening element.

Preferably, each guide roller has a respective axis of rotation. Preferably, said axes of rotation are parallel to each other.

Preferably, the guide rollers are arranged so that the respective outer shells of these rollers are substantially tangential to each other externally. Preferably, the distance between the axes of the two guide rollers is approximately equal to the sum of the respective radii of these rollers.

Preferably, said abutment roller is idle.

Being an idle roller, the abutment roller offers less resistance and friction when urging the fastening element against the applicator drum.

Preferably, said first roller defines a cylindrical surface.

Preferably, said applicator device further comprises a deflecting element extending away from said cylindrical surface, in such a manner that said fastening element slides on said deflecting element while it is positioned in support on said cylindrical surface and/or is in a position immediately downstream of said cylindrical surface with respect to said advancement direction.

Preferably, a deflecting element is to be provided extending away from said cylindrical surface. Preferably, said deflecting element passes over said deflecting element in such a manner as to deflect said advancement direction with respect to a trajectory defined by said guide roller by sliding it over said deflecting element.

The deflecting element allows the fastening element to be guided to follow an optimal advancement trajectory. In fact, the guide formed by the deflecting element makes it possible to follow said optimal advancement trajectory and to avoid, or at least significantly limit, the possibility of said fastening element being incorrectly positioned with respect to the pick-up position, preventing it from being wound around the applicator drum and consequently preventing the fastening element from being supplied to the semi-finished product.

Preferably, said deflecting element has an elongated shape and extends, along said advancement direction, in a longitudinal extension direction between a tangential direction and a radial direction of said first roller.

This improves the precision in positioning and control of the fastening element, reducing the risk of deflection or unwanted contact with other parts of the apparatus.

Preferably, said first roller comprises two coaxial portions configured in such a way that the fastening element rests on the respective cylindrical surfaces of both portions while being supplied to said applicator drum.

Due to the traction exerted on both coaxial portions of the first roller, greater stability and control of the movement of the fastening element is achieved, which contributes to better precision in positioning and tension control of the fastening element.

The elongated shape of the deflecting element avoids, or at least significantly limits, the possibility that once the fastening element is downstream of the first roller, the latter does not position itself in the pick-up position, but instead, for example, winds itself around the guide roller, thereby preventing it from being wound around a portion of the outer shell of said applicator drum and consequently preventing the fastening element from being supplied to the semi-finished product.

Preferably, said deflecting element is at least partially arranged between said portions.

By positioning the deflecting element between the two portions of the roller, a more precise and controlled deflection of the path of the fastening element is achieved. This helps to ensure that the fastening element is directed correctly towards the desired path, minimising the risk of deflection or unintended contact with other parts of the apparatus.

Preferably, the fastening element is substantially flat. Preferably, the fastening element has an adhesive surface. Preferably, said feeding device is configured in such a way as to feed said fastening element. Preferably, said feeding device is configured in such a way that said adhesive surface rests on said cylindrical surface while the fastening element is passed over said guide roller.

Preferably, it is intended to pass said fastening element over the cylindrical surface of the first roller so that said adhesive surface of the fastening element rests on said cylindrical surface while the fastening element is passed over said first roller.

Resting the adhesive surface on the cylindrical surface of the first roller prevents the fastening element from adhering prematurely to other surfaces. This feature makes it possible to limit the occurrence of possible jamming or malfunctions due to unwanted adhesions.

Furthermore, when the adhesive surface of the fastening element is resting on said cylindrical surface, it is possible to supply the fastening element to the drum with the non-adhesive side in contact with the drum, facilitating the process of applying the fastening element to the multilayer semi-finished product, since the drum can subsequently apply the fastening element to said semi-finished product in such a way that the adhesive surface comes into direct contact with said semi-finished product.

Preferably, said applicator drum comprises an outer shell. Preferably, said applicator drum is configured to rotate about a respective axis of rotation and wind said fastening element around a portion of said outer shell.

Preferably, said fastening element is to be wound onto said applicator drum, preferably by rotation of said applicator drum.

The rotational movement of the drum enables uniform winding of the fastening element onto the multilayer semi-finished product. This helps to ensure that the fastening element is evenly distributed on the multilayer semi-finished product.

Preferably, said applicator drum and said abutment roller are configured to be moved between a mutual distal position, in which said abutment roller is distanced from said outer shell, and an abutment position, in which said abutment roller is in contact with said applicator drum in such a manner that said fastening element, arranged between said abutment roller and said applicator drum, is urged against said outer shell. Preferably, said applicator device further comprises a cutting element arranged in an adjacent position to said abutment roller and configured to cut said fastening element abutting said outer shell.

Thanks to the mutual movement of the applicator drum and the abutment roller, it is possible to maintain constant tension on the fastening element, preventing the fastening element from coming loose or detached, and ensuring an even and secure application on the drum.

The cutting element allows the fastening element to be cut so as to ensure that the fastening element has the desired length, enabling continuous feeding of the fastening element from a dispensing coil.

Co-ordination between the movement of the fastening element, the movement of the drum and the cutting process facilitates the execution of the process with precision and without interruptions, increasing overall productivity and reducing downtime.

Preferably, said applicator device comprises a further abutment roller.

By using two abutment rollers, the tension on the fastening element can be distributed more evenly over the drum, reducing the risk of deformation or uneven tension.

Preferably, said cutting element is interposed between said abutment roller and said further abutment roller.

Positioning the cutting element between the two abutment rollers enables more precise and stable cutting of the fastening element. The even pressure exerted by the abutment rollers can help keep the fastening element in optimal position during cutting, reducing the risk of unwanted movement or deformation of the fastening element during operation.

Preferably, said multilayer semi-finished product comprises at least one separator ribbon and at least two conductor ribbons.

Preferably, said multilayer semi-finished product is coupled in the form of a coil.

Preferably, said fastening element is in the form of a ribbon.

Each of these features contributes to making the device, apparatus and method according to the various aspects of the present invention particularly suitable for making electrochemical cells.

It should be noted that some steps and some characteristics of the methods described above may be independent of the order of execution reported. In addition, one or more of the steps of the method may be performed repetitively, or may be performed in series or in parallel with other steps of the method.

The characteristics and advantages of the invention will become clearer from the detailed description of a preferred embodiment thereof, shown by way of nonlimiting example, with reference to the appended drawings wherein:
- Figure 1 is a perspective view of the applicator device according to the present invention;
- Figures 2 and 3 are perspective views of the applicator device in Figure 1;
- Figure 4 is a perspective view of an internal assembly that includes a fastening element applied via the applicator device of the present invention; and
- Figure 5 is a perspective view of an apparatus for making an internal assembly according to the present invention.

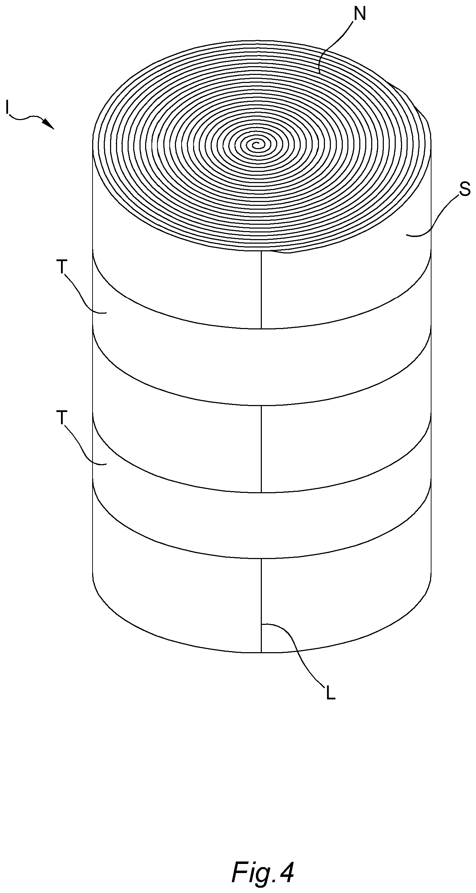

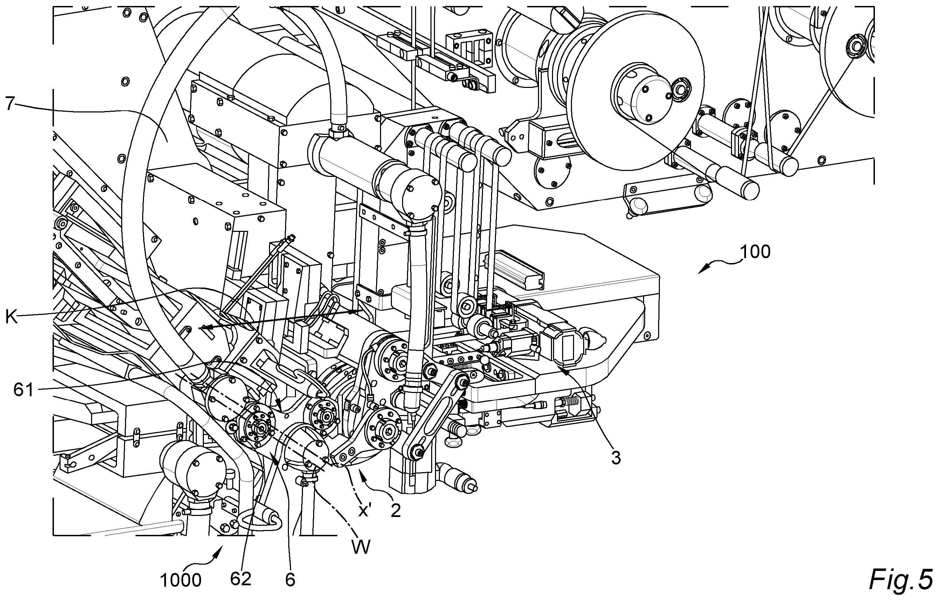

Referring initially to Figure 5, 1000 denotes an apparatus for making an internal assembly I, the latter illustrated in Figure 4, made in accordance with the present invention.

In some embodiments, such as the one illustrated in the accompanying figures, the apparatus 1000 is intended for use in the construction of coils for electrochemical cells.

As will be described in further detail below, however, the present invention may also be applied in internal assemblies of other types, not necessarily intended for making electrochemical cells.

Preferably, the internal assembly I is made by means of the apparatus 1000 of the present invention starting from at least one ribbon-like article which, as will be illustrated in detail below, is processed in such a way as to obtain a semi-finished product with layered structure S to be used for making the internal assembly itself.

In preferred embodiments, such as the one illustrated in Figure 5, a plurality of ribbon-like articles are used. For example, in the case where the internal assembly I is used in the context of making an electrochemical cell, the ribbon-like articles may consist of conductor and separator ribbons arranged alternately. These ribbons can then be suitably combined to make a layered structure in which the anode, a first separator, the cathode and a second separator alternate. The order between anode and cathode is given by way of example only, and an opposite sequence to the one above may also be provided. More generally, the internal assembly may comprise an alternating sequence of conductor and separator elements.

In this regard, it can also be envisaged that a single ribbon-like article is used, which, for example, can form the separator element of an electrochemical cell. This ribbon-like article can then be combined with conductor elements, e.g. in the form of foils, again with the aim of forming a layered structure.

Alternatively, the present invention can also be applied where both the conductor and separator elements are in the form of individual foils, stacked in a succession of alternating layers.

Preferably, the structure formed by the coupling of the ribbon-like articles is a multilayer semi-finished product S, in which each layer is represented by one of the ribbon-like articles.

As will be explained in more detail below, the ribbon-like articles can be coupled together by winding in spiral form in order to obtain a coil structure.

In other embodiments, not illustrated in the figures, one or more ribbon-like articles may be folded in successive loops, with a substantially "Z"-like extension and coupled alternately with anode and cathode elements in the form of foils.

In further embodiments, also not shown in the figures, the conductor and separator elements can be coupled in a stacked configuration.

In general, at least one coupling device 6, illustrated in a preferred embodiment in Figure 5, can be provided, which preferably includes at least one coupling head 62 and is configured to couple the ribbon-like article(s), and more generally the conductor and separator elements, in the multilayer semi-finished product S.

For example, the coupling device 6 can be configured in such a way that the ribbon-like articles converge on it and, preferably, are wound in a spiral form.

For this purpose, the coupling heads 62 can be configured to rotate around a relative winding axis W during the performance of the coupling of the ribbon-like article(s).

As previously mentioned, in preferred embodiments, the coupling device 6 comprises more than one coupling head 62.

The coupling heads 62 can be supported on a movable assembly 61, e.g. in the form of a wheel, which rotates about a respective axis of rotation X', preferably parallel to the winding axis W, to alternate the operating position of the coupling heads 62.

This makes it possible to position each of the coupling heads 62 cyclically at a number of different workstations.

For example, in one of these stations the coupling of the ribbon-like articles can take place and in a further station the application of a fastening element T can take place, in a manner that will be described in more detail below.

A further station can, for example, be represented by an unloading station at which the internal assembly I is unloaded once it has been made.

Note that, in general, the performance of the coupling operation and the application of the fastening element can also take place while the gripping device(s) is/are rotating about the axis of rotation X'.

In addition to this movement, it can also be envisaged that the coupling device and the semi-finished product S can also move along a translation direction K, shown schematically in Figure 5.

For this purpose, the apparatus 1000 may comprise a respective movement device 7, for example in the form of a movable carriage, configured in such a way as to move the coupling device 6 according to a respective oscillation movement along the translation direction K or more generally according to a cyclic movement along a respective straight and/or curved trajectory between two respective distinct positions.

In more detail, the movement along such a path can be defined by any combination of one or more rotations and one or more translations, or by a single movement, be it rotation or translation, as long as it is configured to make the coupling head(s) 62 and the multilayer semi-finished product S assume two distinct spatial positions remote from each other. In other words, the movement must not be such that the coupling head(s) 62 and the multilayer semi-finished product S only rotate about their axis.

Advantageously, the movement along the translation direction of the winding head(s) 62 has the effect of varying the length of parallel sections of the ribbon-like article(s).

This can achieve an accumulation effect and, by coordinating the movement in the translation direction with the winding or other coupling operation, it is possible to form the semi-finished product in association with the movement of the winding device along the direction K. This can have a number of advantages, in particular the possibility of increasing the speed at which the semi-finished product is formed and avoiding or containing the occurrence of states of tension on the ribbon-like articles during processing.

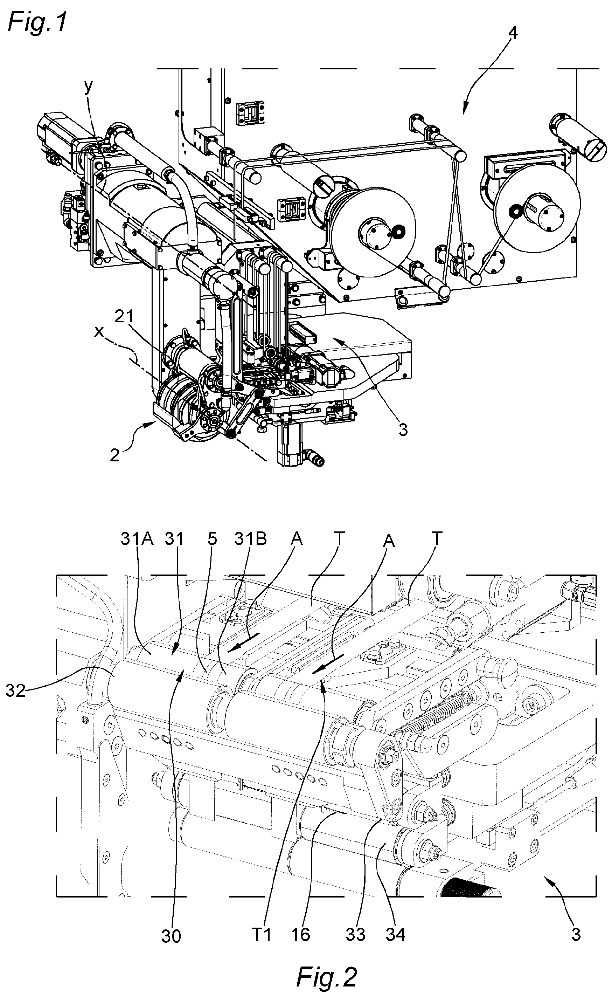

Referring now again to Figures 1, 2 and 3, the apparatus 1000 according to the present invention further comprises an applicator device 100 for applying the fastening element T to the semi-finished product S in such a way as to obtain the internal assembly I.

In preferred embodiments, the fastening element T is positioned at a flap L of the semi-finished article S. In some embodiments, for example, it is intended to fasten an end flap of the ribbon-like article after it has been wound in a spiral or otherwise coupled, thus preventing it from losing the structure obtained by the coupling operation.

Fastening is preferably performed by application, by means of said applicator device 100, of a fastening element T to the flap L. For example, the fastening element T may be formed by a ribbon.

The applicator device 100 comprises an applicator drum 2 configured to transport said fastening element T from a pick-up position to a release position at which the fastening element T is applied to the respective multilayer semi-finished product S.

The fastening element T can be supplied to the applicator drum 2 at said pick-up position by means of a feeding device 3.

The applicator device 100 comprises a storage and dispensing unit 4 at which the fastening element is stored, preferably in the form of a coil, and dispensed to the supply device.

The fastening element T moves along an advancement direction A from the storage and dispensing unit 4 towards the applicator drum 2.

In preferred embodiments, the feeding device 3 comprises a pair of guide rollers 31, 32 and at least one abutment roller 33.

Advantageously, at least one of said guide rollers 31, 32 is a motorised roller and the abutment roller 33 is arranged downstream of said motorised rollers 31, 32 with respect to the advancement direction A.

The feeding device 3 is configured such that the fastening element T is partially wound onto a first roller 31 of the guide rollers 31, 32 and such that the fastening element T passes between the guide rollers 31, 32.

In this way, the rotation of the motorised roller enables the advancement of the fastening element T in the advancement direction A.

As can be seen in Figure 1, the applicator device 100 comprises an applicator drum 2 configured to transport said fastening element T from a pick-up position to a release position at which the fastening element T is applied to the respective multilayer semi-finished product S.

The applicator drum 2 and abutment roller 33 can be brought closer together. The abutment roller 33 is configured in such a way that the fastening element T is pressed against the applicator drum 2 when the applicator drum 2 and abutment roller 33 are brought close to each other.

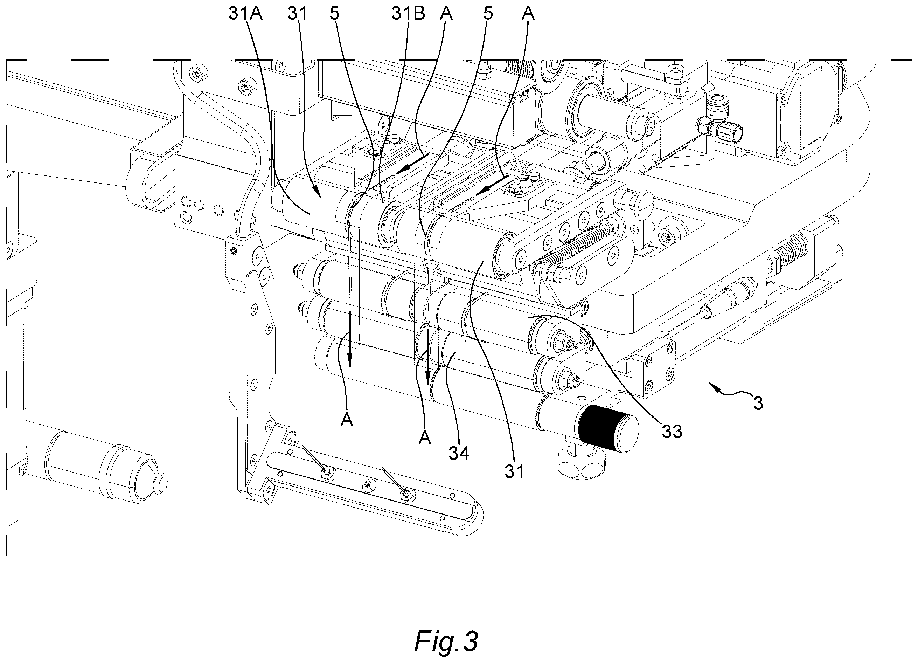

Referring now to Figure 3, the advancement direction A of the fastening element T is deflected by winding it onto the first roller 31.

Referring now to Figure 2, each guide roller 31, 32 has a respective axis of rotation and said axes of rotation are parallel to each other.

It should also be noted that the guide rollers 31, 32 are arranged so that the respective outer shells of these rollers are tangential to each other externally. The distance between the axes of the two guide rollers 31, 32 is approximately equal to the sum of the respective radii of these rollers 31, 32, leaving a defined space for the passage of the fastening element between the two rollers.

In the embodiment shown in Figures 2 and 3, the first roller 31 is motorised. There are also two abutment rollers 33, at least one of which is idle.

In Figure 3, for the sake of visual clarity, the feeding device 3 is shown without showing the non-motorised roller 32 of the pair of guide rollers 31, 32.

The applicator device 100 further comprises a deflecting element 5 extending away from the cylindrical surface 30 of the first guide roller 31, such that the fastening element T slides over the deflecting element 5 while positioned against the cylindrical surface 30 and in a position immediately downstream of the cylindrical surface 30 with respect to the advancement direction A.

In some embodiments, such as that illustrated in the figures, the deflecting element 5 extends from the cylindrical surface 30 in a direction substantially parallel to a direction tangential to the cylindrical surface 30 itself, and preferably corresponding to said tangential direction.

However, it will be appreciated that a certain deflection from this direction can be envisaged, possibly also in order to adapt the solution to possible embodiments that adopt a different positioning of the further components.

In general, therefore, the deflecting element 5 can extend from the cylindrical surface 30, with respect to the advancement direction A towards the applicator drum 2, according to a longitudinal extension direction that can form an angle comprised between +-60° with respect to the aforementioned tangential direction. In some embodiments, the angle may be less and may preferably be comprised between +-45°, preferably +-30°, preferably +-15°, preferably +-5° with respect to the direction tangent to said cylindrical surface 30.

In some embodiments, the first roller 31 comprises two coaxial portions 31A, 31B configured such that the fastening element T rests on the respective cylindrical surfaces of both portions while being supplied to the applicator drum 2. In some embodiments, the deflecting element is at least partially arranged between said portions 31A, 31B.

It should also be noted that in some embodiments, as in the example shown in Figures 2 and 3, there are two first rollers 31 flanked longitudinally.

With this configuration, two fastening elements T can be advanced simultaneously, doubling the production capacity of the applicator device 100 without significantly increasing its footprint or complexity. This allows more fastening elements to be applied in less time, improving process efficiency. This also allows two fastening elements T to be handled in parallel in the space occupied by a single first roller. This optimises the footprint of the applicator device 100 and is particularly advantageous in production environments where space is limited.

The fastening element T is essentially flat and has an adhesive surface T1. The feeding device is configured in such a way that the adhesive surface T1 rests on said cylindrical surface 30 while the fastening element T is passed over the first guide roller 31.

The applicator drum 2 comprises an outer shell 21 and is configured to rotate about a respective axis of rotation X, visible in Figure 1, and to wind the fastening element T around a portion of said outer shell 21.

The applicator drum 2 and the abutment roller 33 are configured to be moved between a mutual distal position, in which the abutment roller 33 is moved away from the outer shell 21, and a abutment position, in which the abutment roller 33 is in contact with said applicator drum 2 in such a manner that the fastening element T, arranged between the abutment roller and the applicator drum 2, is urged against the outer shell 21.

In some embodiments, the applicator device 100 further comprises a cutting element 16 arranged in a position adjacent to said abutment roller 33 and configured to cut the fastening element T abutting the outer shell 21, as can be seen in Figure 2.

The applicator device 100 can advantageously comprise a further abutment roller 34. The cutting element 16 is preferably interposed between the abutment roller 33 and the further abutment roller 34.

Note that the fastening element T is applied at the outer shell 21 of the drum 2 at the pick-up position.

The applicator drum 2 rotates about its axis of rotation X. Through the aforementioned rotation, the applicator drum 2 moves between the pick-up position and the release position. In addition to rotation about the axis X, the applicator drum 2 can also be configured to perform further movements.

For this purpose, the applicator device 100 may comprise a movement device that allows, in some embodiments, the applicator drum to be oscillated with respect to an axis of oscillation Y parallel to the axis X.

It should be noted that, more generally, the applicator drum 2 will be able to perform an additional movement with respect to rotation about the axis X.

This movement can generally allow the coupling device 6 and the applicator drum 2 to move away from and towards each other.

Such movement away from and towards each other can also be associated with the movement of the winding heads 62, and in general of the coupling device 6, along the direction K described above. The movement device 7 of the coupling device 6 can therefore be made to bring the at least one coupling head 62 towards the applicator device 100 and, preferably, to the applicator drum 2.

Once the release position is reached, the applicator drum 2 releases the fastening element T on the semi-finished product S, urging the fastening element against the flap L of the semi-finished product S.

As previously mentioned, note that the fastening element T advantageously has an adhesive face T1 which is arranged in such a way that it makes contact with the semi-finished product S as the applicator drum 2 pushes the fastening element against the semi-finished product S.

In preferred embodiments, the application of the fastening element T takes place by mutual rotation of the applicator drum 2 and the semi-finished product S in such a way that the fastening element T is wound, at least partially, around the semi-finished product S, resulting in the configuration illustrated in Figure 3, in which two separate parallel fastening elements are used.

When the application of the fastening element T is finished, the drum can be moved back to the pick-up position to pick up another fastening element and repeat the previously described operations in a cyclic manner.

Obviously, a person skilled in the art may, in order to meet specific and contingent application requirements, make further modifications and variants, all falling within the scope of protection as defined by the following claims.

## Claims

1. Applicator device (100) for applying a fastening element (T) to a multilayer semi-finished product (S) for making an internal assembly (I), preferably for electrochemical cells, said fastening element (T) being flexible, said applicator device (100) comprising:
• an applicator drum (2) configured to transport said fastening element (T) from a pick-up position to a release position at which said fastening element (T) is applied to a respective multilayer semi-finished product (S);
• a feeding device (3) configured to supply said fastening element (T) to said applicator drum (2) at said pick-up position;
• a storage and dispensing unit (4) at which said fastening element (T) is stored, preferably in the form of a coil, and dispensed towards said feeding device (3), said applicator device (100) being configured in such a manner as to define an advancement direction (A) of said fastening element (T) from said storage and dispensing unit (4) towards said applicator drum (2);
• wherein said feeding device (3) comprises a pair of guide rollers (31, 32) and at least one abutment roller (33), at least one of said guide rollers being a motorised roller, and wherein said abutment roller (33) is arranged downstream of said motorised rollers (31, 32) with respect to said advancement direction (A), said feeding device (3) being configured in such a manner that said fastening element (T) is partially wound onto a first roller (31) of said guide rollers (31, 32) and in such a manner that said fastening element (T) passes between said guide rollers (31, 32) advancing said fastening element (T) in said advancement direction (A), and
• wherein said applicator drum (2) and said abutment roller (33) are susceptible to move towards each other by displacement of said applicator drum (2) towards said abutment roller (33), said abutment roller (33) being configured in such a way as to urge said fastening element (T) against said applicator drum (2) during a movement of said applicator drum (2) and/or said abutment roller (33) towards each other.

2. Applicator device (100) according to the preceding claim, wherein said feeding device (3) is configured in such a way that said advancement direction (A) is deflected by winding said fastening element (T) onto said first roller (31).

3. Applicator device (100) according to claim 1 or 2, wherein said first roller (31) is motorised.

4. Applicator device (100) according to any one of the preceding claims, wherein both rollers of said pair are motorised.

5. Applicator device (100) according to any one of the preceding claims, comprising a pair of guide rollers (31, 32) configured so that the fastening element (T) passes between the rollers of said pair.

6. Applicator device (100) according to any one of the preceding claims, wherein said abutment roller (33) is idle.

7. Applicator device (100) according to any one of the preceding claims, wherein said first roller (31) defines a cylindrical surface (30), said applicator device (100) further comprising a deflecting element (5) extending away from said cylindrical surface (30), in such a manner that said fastening element (T) slides on said deflecting element (5) while it is positioned in support on said cylindrical surface (30) and/or is in a position immediately downstream of said cylindrical surface (30) with respect to said advancement direction (A).

8. Applicator device (100) according to the preceding claim, wherein said deflecting element (5) has an elongated shape and extends, along said advancement direction (A), in a longitudinal extension direction between a tangential direction and a radial direction of said first roller (31).

9. Applicator device (100) according to claim 7 or 8, wherein said first roller (31) comprises two coaxial portions (31A, 31B) configured in such a manner that the fastening element (T) is resting on respective cylindrical surfaces of both portions while being supplied to said applicator drum (2), said deflecting element (5) being at least partially arranged between said portions (31A, 31B).

10. Applicator device (100) according to any one of the preceding claims, when dependent on claim 7, wherein said fastening element (T) is substantially flat and has an adhesive surface (T1), said feeding device (3) being configured in such a manner that said adhesive surface (T1) is supported on said cylindrical surface (30) while said fastening element (T) is passed over said guide roller (31).

11. Applicator device (100) according to any one of the preceding claims, wherein said applicator drum (2) comprises an outer shell (21) and is configured to rotate about a respective axis of rotation (X) and wind said fastening element (T) onto a portion of said outer shell (21).

12. Applicator device (100) according to the preceding claim, wherein said applicator drum (2) and said abutment roller (33) are configured to be moved between a mutual distal position, in which said abutment roller (33) is distanced from said outer shell (21), and an abutment position, in which said abutment roller (33) is in contact with said applicator drum (2) in such a manner that said fastening element (T), arranged between said abutment roller and said applicator drum (2), is urged against said outer shell (21), said applicator device (100) further comprising a cutting element (16) arranged in an adjacent position to said abutment roller (33) and configured to cut said fastening element (T) abutting said outer shell (21).

13. Applicator device (100) according to the preceding claim, comprising a further abutment roller (34), said cutting element (16) being interposed between said abutment roller (33) and said further abutment roller (34).

14. Apparatus (1000) for making an internal assembly (I) comprising a multilayer semi-finished product (S) and a respective fastening element (T), said apparatus including a coupling device (6) configured to make the multilayer semi-finished product (S) by coupling a plurality of individual layers, and an applicator device (100) made according to any one of the preceding claims, said applicator device (100) being associated with said coupling device (6) in such a way as to apply said fastening element (T) to said multilayer semi-finished product (S) at at least one outer flap (L) of said semi-finished product (S).

15. Method for applying a fastening element (T) to a multilayer semi-finished product (S) comprising:
• Supplying a multilayer semi-finished product (S) made by coupling a plurality of layers;
• Supplying a fastening element (T), said fastening element (T) being flexible;
• Passing said fastening element (T) between a pair of guide rollers (31, 32), rotating at least one of said guide rollers in such a way that said fastening element (T) advances towards an applicator drum (2);
• Supplying an abutment roller (33) downstream of said guide rollers (31, 32) with respect to an advancement direction (A) of said fastening element (T);
• Moving said applicator drum (2) and said abutment roller (33) towards each other by moving said applicator drum (2) and/or said abutment roller (33);
• Urging said fastening element (T) against said applicator drum (2) after said moving said applicator drum (2) and said abutment roller (33) towards each other;
• Positioning said fastening element (T) on said applicator drum (2);
• Applying the fastening element (T) to at least one outer flap (L) of said semi-finished product (S) via said applicator drum (2).

16. Method according to the preceding claim, wherein said positioning said fastening element (T) on said applicator drum (2) comprises winding said fastening element (T) onto said applicator drum (2), preferably by rotation of said applicator drum (2).

17. Method according to claim 15 or 16, wherein said fastening element (T) is partially wound onto a first roller (31) of said guide rollers (31, 32), said advancement direction (A) being deflected by winding said fastening element (T) onto said first roller (31).

18. Method according to the preceding claim, wherein said first roller (31) defines a cylindrical surface (30) over which said fastening element (T) is passed and wherein said fastening element (T) is substantially flat and has an adhesive surface (T1), said adhesive surface (T1) being supported on said cylindrical surface (30) while said fastening element (T) is passed over said first roller (31).

19. Method according to the preceding claim, further comprising providing a deflecting element (5) extending away from said cylindrical surface (30), said method comprising passing said fastening element (T) over said deflecting element (5) in such a manner as to deflect said advancement direction (A) with respect to a trajectory defined by said guide roller (31) by sliding it over said deflecting element (5).

20. Method according to any one of claims 15 to 19, wherein said abutment roller (33) is idle.
